# EUROPEAN PATENT SPECIFICATION

(11) **EP 2 861 650 B1**
(45) Date of publication and mention of the grant of the patent: **20.03.2019**
(21) Application number: 13880694.8
(22) Date of filing: 20.05.2013
(51) Int. Cl.: C08G 73/10, C08L 79/00, C08L 77/06, C08K 9/06, C08K 3/36

(54) **POLYIMIDE RESIN AND POLYIMIDE FILM PRODUCED THEREFROM**
POLYIMIDHARZ UND DARAUS HERGESTELLTE POLYIMIDFOLIE
RÉSINE POLYIMIDE ET FILM PRODUIT À PARTIR DE LA RÉSINE POLYIMIDE

(43) Date of publication of application: 22.04.2015
(73) Proprietor: Kolon Industries, Inc., Gwacheon-si, Gyeonggi-do 13837 (KR)
(72) Inventor: PARK, Hyo Jun, Yongin-si Gyeonggi-do 448-160 (KR); JUNG, Hak Gee, Yongin-si Gyeonggi-do 448-172 (KR); JU, Chul Ha, Yongin-si Gyeonggi-do 446-771 (KR)
(74) Representative: Ter Meer Steinmeister & Partner
(86) International application number: PCT/KR2013/004394
(87) International publication number: WO 2014/189154

(56) References cited:
- EP-A1- 2 248 843
- US-A- 5 688 841
- US-A1- 2006 127 686
- US-A1- 2009 226 642
- US-A1- 2011 111 333
- YULAI HAN ET AL: "Preparation and Characterization of Polyimide/Fluorinated Silicate Nano-hybrid Thin Films with Low Refractive Indices", JOURNAL OF PHOTOPOLYMER SCIENCE AND TECHNOLOGY, vol. 21, no. 1, 31 July 2008 (2008-07-31), pages 143-150, XP055260034, JP ISSN: 0914-9244, DOI: 10.2494/photopolymer.21.143
- MO, TE-CHENG ET AL.: 'Synthesis and Characterization of Polyimide-Silica Nanocomposites Using Novel Fluorine-Modified Silica Nanoparticles' JOURNAL OF APPLIED POLYMER SCIENCE vol. 104, no. 2, 2007, pages 882 - 890, XP055260029
- HAN, YULAI ET AL.: 'Preparation and Characterization of Polyimide/ Fluorinated Silicate Nano-hybrid Thin Films with Low Refractive Indices' JOURNAL OF PHOTOPOLYMER SCIENCE AND TECHNOLOGY vol. 21, no. 1, 2008, pages 143 - 150, XP055260034

## Description

### [Technical Field]

The present invention relates to a polyimide resin including a surface-fluorinated silica filler, and a polyimide film produced therefrom.

### [Background Art]

Generally, a polyimide (PI) resin is referred to as "a high heat-resistant resin which is prepared by a process including the steps of: solution-polymerizing aromatic dianhydride with aromatic diamine or aromatic diisocyanate to prepare a polyamic acid derivative; and ring-closing and dewatering the polyamic acid derivate to imidize the polyamic acid derivative. In order to prepare a polyimide resin, pyromellitic dianhydride (PMDA), biphenyltetracarboxylic dianhydride (BPDA) or the like is used as aromatic dianhydride, and oxydianiline (ODA), p-phenylenediamine (p-PDA), m-phenylenediamine (m-PDA), methylenedianiline (MDA), bisaminophenylhexafluoropropane (HFDA) or the like is used as aromatic diamine.

Such a polyimide resin is an insoluble ultra-high heat-resistant resin, and has been widely used in the field of advanced heat-resistant materials, such as automobile materials, aircraft materials, spacecraft materials and the like, and electronic materials, such as insulating coating agents, insulation films, semiconductors, electrode protection films for TFT-LCDs and the like, because it has excellent oxidation resistance, heat resistance, radiation resistance, low-temperature characteristics, chemical resistance and the like. Recently, such a polyimide resin has been used in display materials such as optical fibers, liquid crystal oriented films and the like, and has been used in transparent electrode films, wherein a conductive filler is added to a polyimide film or a polyimide film is coated with a conductive filler.

A general polyimide resin is dark brown or yellow in color. Therefore, in order to impart transparency to the polyimide resin, a linkage group (-O-, -SO₂-, -CO-, -CF₃CCF₃- or the like) or a side chain having a relatively large free volume is provided to the main chain of the polyimide resin to minimize the formation of charge-transfer complexes between molecules and in molecules.

In the case of such a transparent polyimide film, its heat resistance deteriorates due to the introduced functional group. The reason for this is that its color becomes light, but simultaneously its heat resistance deteriorates, due to the formation of charge-transfer complexes. Due to this deterioration of heat resistance, there is a limitation to the application of a transparent polyimide film in the field of advanced materials requiring high process temperature, such as displays, semiconductors and the like.

Meanwhile, a filler is used in a film for many purposes. For example, a filler is used to increase the traveling performance of a film, and, if necessary, to change the optical properties of a film and enhance the heat resistance of a film. However, a filler is not practically used for these purposes because it is difficult to uniformly disperse the filler in a polyimide resin.

US 2009/226642 A1 discloses polyimide films based on 2,2'-bis(trifluoromethyl)benzidine (TFDB), 3,3',4,4'-biphenyl tetracarboxylic dianhydride (BPDA) and 4,4'-(hexafluoroisopropylidene)diphthalic dianhydride(6FDA).

### [Disclosure]

### [Technical Problem]

Accordingly, the present invention has been devised to solve the above problems, and an object of the present invention is to provide a transparent polyimide film including a surface-fluorinated filler.

Another object of the present invention is to provide a substrate for displays, the substrate having improved heat resistance.

### [Technical Solution]

In order to accomplish the above objects, the present invention provides a polyimide resin including a silica filler surface-treated with a fluorine-containing compound as claimed in claim 1.

In the polyimide resin, the silica filler may be included in an amount of 0.01 to 0.1 wt% based on the total amount of the polyimide resin.

In the polyimide resin, the fluorine-containing compound may be at least one selected from the group consisting of triethoxyfluorosilane, triethoxytrifluoromethylsilane, 1,1,2,2-tetrahydroperfluorohexyltriethoxysilane, triethoxy[4-(trifluoromethyl)phenyl]silane, and triethoxy(3,3,4,4,5,5,6,6,7,7,8,8,9,9,10,10,10-heptadecafluorodecyl) silane.

In the polyimide resin, the polyimide resin may have a haze of 1.5% or less.

In the polyimide resin, the polyimide resin may have an optical transmittance of 87% or more to light having a wavelength of 550 nm, based on a film formed of the polyimide resin and having a thickness of 25 to 100 *µ*m.

In the polyimide resin, the polyimide resin includes a repetitive unit derived from a diamine monomer and a dianhydride monomer, and the dianhydrided monomer includes bicyclo[2.2.2]oct-7-ene-2,3,5,6-tetracarboxylic acid dianhydride (hereinafter, BTA).

In the polyimide resin, the amount of the bicyclo[2.2.2]oct-7-ene-2,3,5,6-tetracarboxylic acid dianhydride (hereinafter, BTA) is 4 ∼ 30 mol% based on the total amount of the dianhydride monomer.

In the polyimide resin, the dianhydride monomer may further include at least one selected from the group consisting of 2,2-bis(3,4-dicarboxyphenyl)hexafluoropropane dianhydride (6FDA), 4-(2,5-dioxotetrahydrofuran-3-yl)-1,2,3,4-tetrahydronaphthalene-1,2-dicarboxylic dianhydride (TDA), pyromellitic dianhydride (1,2,4,5-benzene tetracarboxylic dianhydride,?PMDA), benzophenone tetracarboxylic dianhydride (BTDA), biphenyl tetracarboxylic dianhydride (BPDA), oxydiphthalic dianhydride (ODPA), biscarboxyphenyl dimethylsilane dianhydride (SiDA), bisdicarboxyphenoxy diphenylsulfide dianhydride (BDSDA), sulfonyldiphthalic anhydride (SO2DPA), cyclobutane tetracarboxylic dianhydride (CBDA), and isopropylidenediphenoxy bisphthalic anhydride (6HBDA).

In the polyimide resin, the diamine monomer is at least one fluorine-substituted diamine monomer selected from the group consisting of bisaminophenoxyphenyl heaxafluoropropane (4BDAF), bisaminophenyl hexafluoropropane (33-6F, 44-6F), bistrifluoromethyl benzidine (TFDB), and bisaminohydroxyphenyl hexafluoropropane (DBOH).

In the polyimide resin, the polyimide resin further includes an anhydride monomer.

In the polyimide resin, the anhydride monomer is 4-phenylethynyl phthalic anhydride (4-PEPA).

In the polyimide resin, the amount of the 4-phenylethynyl phthalic anhydride (4-PEPA) may be 20 mol% or less based on the total amount of the diamine monomer.

Another aspect of the present invention provides a polyimide film formed using the polyimide resin.

Still another aspect of the present invention provides a substrate for displays, including the polyimide film.

### [Advantageous Effects]

As described above, the present invention provides a transparent polyimide film containing a surface-fluorinated filler. Further, the present invention provides a substrate for displays, which includes the polyimide film containing the surface-fluorinated filler.

### [Best Mode]

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe the best method he or she knows for carrying out the invention.

Throughout the present specification, when it is described that any part "comprises," "includes," "contains" or "has" any constituent, it means that the part may further include other constituents, not that it excludes other constituents, unless oppositely described.

In an aspect, the present invention provides a polyimide resin including a silica filler surface-treated with a fluorine-containing compound.

In another aspect, the present invention provides a polyimide film formed using the polyimide resin, and provides a substrate for displays, including the polyimide film.

Hereinafter, the present invention will be described in detail.

Generally, since a silica filler has very strong aggregability of silica itself, even when it is dispersed in a polyimide resin by ultrasonic waves or various kinds of mills, it can be re-aggregated. Thus, in the present invention, when a silica filler is surface-treated with a fluorine-containing compound, the free volume of the surface thereof can be increased, and aggregation between silica filler particles can be prevented by repulsive force therebetween, thereby improving the mixibility and dispersibility of the silica filler with a polyimide resin.

The silica filler surface-treated with a fluorine-containing compound is prepared by treating the surface of a silica filler with an acid to produce a hydroxy group (-OH) on the surface thereof and then sol-gel treating the surface of the silica filler using fluorine-containing alkoxy silane to fluorinate the surface thereof. In order to exhibit reformed characteristics without disturbing the bonding structure of a polymer resin, the silica filler may be included in an amount of 0.01 to 0.1 wt% based on the total amount of a polyimide resin, but may also be included in an amount of more than 0.1 wt% depending on the kind of polyimide resin used.

In this case, the acid can be used without limitation as long as it can produce a hydroxy group (-OH) on the surface of the silica filler. Examples of the acid may include nitric acid, sulfuric acid, hydrochloric acid, acetic acid, and the like. The amount of the acid is not particularly limited as long as a hydroxy group (-OH) can be sufficiently produced.

Further, the fluorine-containing alkoxy silane may include at least one selected from the group consisting of triethoxyfluorosilane, triethoxytrifluoromethylsilane, 1,1,2,2-tetrahydroperfluorohexyltriethoxysilane, triethoxy-3,3,4,4,5,5,6,6,6-nonafluorohexylsilane, triethoxy[4-(trifluoromethyl)phenyl]silane, and triethoxy(3,3,4,4,5,5,6,6,7,7,8,8,9,9,10,10,10-heptadecafluorodecyl)silane. The amount of the fluorine-containing alkoxy silane is different depending on the kind of alkoxy silane used. In terms of effect or cost with respect to content, the amount of the fluorine-containing alkoxy silane may be 1 to 50 parts by weight, and preferably 5 to 25 parts by weight, based on 100 parts by weight of the silica filler.

The particle size of the silica filler can be adjusted according to the characteristics of a film to be modified and the kind of filler, and is not particularly limited. The average particle size of the silica filler may be 0.001 to 50 *µ*m, and preferably 0.01 to 1 *µ*m. In this case, the modifying effect of a polyimide film is easily exhibited, and a polyimide film having excellent surface properties and mechanical characteristics can be obtained.

The polyimide resin including such a silica filler has a haze of 1.5% or less. When the polyimide resin is formed into a film, the optical transmittance of the film to light having a wavelength of 550 nm is 87% or more based on the film thickness of 15 ∼ 100 *µ*m. In this case, low haze and high optical transmittance can be realized, compared to when a filler, which is not surface-treated, is added in the same amount.

Meanwhile, the polyimide resin includes a repetitive unit derived from a diamine monomer and a dianhydride monomer, and the dianhydrided monomer includes bicyclo[2.2.2]oct-7-ene-2,3,5,6-tetracarboxylic acid dianhydride (hereinafter, BTA).

In the case of a transparent polyimide resin, the peculiar high heat resistance of polyimide is often deteriorated due to a monomer introduced to maintain its transparency. In order to improve the heat resistance of the transparent polyimide resin, diamines (para-phenylenediamine (p-PDA), 4,4-oxydianiline (4,4-ODA)) or dianhydrides (phenyl tetracarboxylic dianhydride (BPDA), pyromellitic dianhydride(PMDA)) may be applied. However, even in this case, there is a problem in that the degree of improvement of heat resistance of the transparent polyimide resin is insufficient.

Thus, in the present invention, in order to overcome the above-mentioned problem, a monomer (bicyclo[2.2.2]oct-7-ene-2,3,5,6-tetracarboxylic acid dianhydride) having a functional group cross-linkable with diamine or dianhydride is provided to a polyimide resin, so a crosslinking group is provided to the main chain of the polyimide resin unlike a conventional polyimide polymerization method without using a crosslinking group, thereby improving the heat resistance of a polyimide film.

The amount of the bicyclo[2.2.2]oct-7-ene-2,3,5,6-tetracarboxylic acid dianhydride (hereinafter, BTA) may be 4 ∼ 30 mol% based on the total amount of the dianhydride monomer. When the amount thereof is less than 4 mol%, there is a problem in that the physical properties, such as heat resistance and the like, of the polyimide film are not improved because it has a small amount of functional group. Further, when the amount thereof is more than 30 mol%, there is a problem in that the molecular weight of polyimide becomes small, and a polyimide film is easily broken, so it is difficult to exhibit the characteristics of the polyimide film. In this case, when the reactivity of BTA is poor, a polyimide film may not be formed. In this case, in order to make up for the low reactivity of BTA, a diamine monomer having high flexibility can be additionally used. Here, the diamine monomer used in the present invention may be selected from the group consisting of m-bisaminophenoxydiphenylsulfone (mBAPS), aminophenoxybenzene(APB) derivatives, and 2,2'-bis[4(4-aminophenoxy)phenyl]hexafluoropropane (4-BDAF).

Further, examples of the dianhydride monomer additionally used in the present invention may include, but are not limited to, 2,2-bis(3,4-dicarboxyphenyl)hexafluoropropane dianhydride (6FDA), 4-(2,5-dioxotetrahydrofuran-3-yl)-1,2,3,4-tetrahydronaphthalene-1,2-dicarboxylic dianhydride (TDA), pyromellitic dianhydride (1,2,4,5-benzene tetracarboxylic dianhydride,?PMDA), benzophenone tetracarboxylic dianhydride (BTDA), biphenyl tetracarboxylic dianhydride (BPDA), oxydiphthalic dianhydride (ODPA), biscarboxyphenyl dimethylsilane dianhydride (SiDA), bisdicarboxyphenoxy diphenylsulfide dianhydride (BDSDA), sulfonyldiphthalic anhydride (SO2DPA), cyclobutane tetracarboxylic dianhydride (CBDA), isopropylidenediphenoxy bisphthalic anhydride (6HBDA), and bicyclo[2.2.2]oct-7-ene-2,3,5,6-tetracarboxylic acid dianhydride (BTA). They each may be used independently or in a combination thereof.

The diamine monomer is at least one fluorine-substituted diamine monomer selected from the group consisting of bisaminophenoxyphenyl heaxafluoropropane (4BDAF), bisaminophenyl hexafluoropropane (33-6F, 44-6F), bistrifluoromethyl benzidine (TFDB), and bisaminohydroxyphenyl hexafluoropropane (DBOH).

In the present invention, a fluorinated diamine monomer and a fluorinated dianhydride monomer are used, so the compatibility of a polyimide resin with a silica filler surface-treated with a fluorine-containing compound is improved, thus improving the dispersibility of the silica filler in the polyimide resin.

Meanwhile, in the present invention, in order to improve the heat resistance of a polyimide film, an anhydride monomer is added to the above-mentioned dianhydride monomer and diamine monomer at a molar ratio of 1: 1 to substitute an end of a polyimide molecular chain with an anhydride monomer. These monomers are polymerized and then imidized.

The anhydride monomer is 4-phenylethynyl phthalic anhydride (4-PEPA). The polyimide resin may include a diamine monomer, a dianhydiride monomer and an anhydride monomer such that a molar ratio of diamine monomer: dianhydride monomer and anhydride monomer is 1: 1. The amount of the 4-phenylethynyl phthalic anhydride (4-PEPA) may be 20 mol% or less, and preferably 4 ∼ 20 mol%, based on a total amount of the diamine monomer. When the amount of 4-PEPA is less than 4 mol%, there is a problem in that its effect is insufficient, and when the amount thereof is more than 20 mol%, there is a problem in that the physical properties of the polyimide resin are deteriorated because the molecular weight of a main chain of polyimide is very small.

The polyimide film of the present invention is formed using the above-mentioned polyimide resin including a silica filler surface-treated with a fluorine-containing compound by a general method.

Addition methods of the silica filler surface-treated with a fluorine-containing compound may include, but are not limited to, a method of adding it to a polyamic acid solution before or after polymerization, a method of kneading it using a 3 roll mill, a high-speed stirrer, a rotary mixer or the like after the polymerization of polyamic acid, a method of preparing a filler-dispersed solution and then mixing it with a polyamic acid solution, and the like.

In an embodiment, the polyimide film of the present invention is formed by a process including the steps of: dispersing a silica filler surface-treated with a fluorine-containing compound in a first solvent in the above-mentioned amount; polymerizing diamine monomers and dianhydride monomers at a molar ratio of 1: 0.9 to 1: 1.05 to obtain polyamic acid; and imidizing the obtained polyamic acid.

The polymerization reaction conditions are not particularly limited. However, it is preferred that the reaction temperature be -20 to 80°C, and that the reaction time be 2 to 48 hours. Further, it is more preferred that the polymerization reaction be conducted under an inert gas atmosphere of argon, nitrogen or the like.

The first solvent used for the polymerization of the monomers is not particularly limited as long as it can dissolve polyamic acid. For example, the first solvent may be at least one polar solvent selected from the group consisting of m-cresol, N-methyl-2-pyrrolidone (NMP), dimethylformamide (DMF), dimethylacetamide (DMAc), dimethylsulfoxide (DMSO), acetone, and diethyl acetate. In addition, as the first solvent, a low-boiling solvent such as tetrahydrofuran (THF), chloroform or the like, or a poorly absorbable solvent such as γ-butyrolactone or the like may be used.

The amount of the first solvent is not particularly limited. However, in order to obtain a polyamic acid solution having suitable molecular weight and viscosity, it is preferred that the amount of the first solvent be 50 to 95 wt%, more preferably 70 to 90 wt%, based on the total amount of the polyamic acid solution.

The polyamic acid solution prepared in this way is imidized to prepare a polyimide resin. Here, it is preferred that the glass transition temperature of the prepared polyimide resin be 200 to 400°C in terms of thermal stability.

The method of forming the obtained polyamic solution into a polyimide film may be performed by a commonly-known method. That is, the polyimide film may be obtained by casting the polyamic acid solution on a support and then imidizing the cast polyamic acid solution.

As the imidization method, thermal imidization, chemical imidization or a combination thereof may be used. Chemical imidization is a method of imidizing the polyamic acid solution by adding a dehydrator (typical example: acid anhydrides such as acetic anhydride and the like) and an imidization catalyst (typical example: tertiary amines such as isoquinoline, picoline, pyridine and the like) to the polyamic acid solution. In the case of thermal imidization or a combination of thermal imidization and chemical imidization, the heating conditions of the polyamic acid solution may be changed according to the kind of a polyamic acid solution and the thickness of a polyimide film.

In the case of a combination of thermal imidization and chemical imidization, a method of forming a polyimide film is described as follows. First, a dehydrator and an imidization catalyst are added to a polyamic acid solution. Then, the polyamic acid solution is cast on a support and then heated to 50 ∼ 200°C, preferably 80 ∼ 180°C, to activate the dehydrator and the imidization catalyst. Then, the polyamic acid solution is partially cured and dried to obtain a gelled polyamic acid film, and then the gelled polemic acid solution film is detached from the support. Then, this gelled polyamic acid film is fixed on a support plate, and then heated to 100 ∼ 400°C for 5 ∼ 400 minutes to obtain a polyimide film. Here, the gelled polyamic acid film may be fixed using a pin type frame or a clip type frame. As the support, a glass plate, aluminum foil, a stainless belt, a stainless drum or the like may be used.

Meanwhile, in the present invention, the obtained polyamic acid solution may be formed into a polyimide film as follows. That is, first, the obtained polyamic acid solution is imidized. Then, the imidized polyamic acid solution is introduced into a second solvent, precipitated, filtered and then dried to obtain solid polyimide. Subsequently, a filler is dispersed in a first solvent using an ultrasonicator, and then the solid polyimide is dissolved in the filler-dispersed solvent to obtain a polyimide solution. This polyimide solution is formed into a polyimide film by a film-forming process.

As described above, in order to imidize the polyamic acid solution, thermal imidization, chemical imidization or a combination of thermal imidization and chemical imidization may be used. In the case of a combination of thermal imidization and chemical imidization, specifically, the polyamic acid solution may be imidized by adding a dehydrator and an imidization catalyst to the polyamic acid solution and then heating it to 20 ∼ 180°C for 0.5 ∼ 12 hours.

As the first solvent, the solvent used in the polymerization of the polyamic acid solution may be used. The polarity of the second solvent may be lower than that of the first solvent in order to obtain solid polyimide. Specifically, the second solvent may be at least one selected from among water, alcohols, ethers, and ketones.

The amount of the second solvent is not particularly limited. However, it is preferred that the amount of the second solvent be 500 ∼ 2000 parts by weight based on 100 parts by weight of the polyamic acid solution. In consideration of the boiling point of the second solvent, it is preferred that the obtained solid polyimide be filtered and dried at a temperature of 50 ∼ 120°C for 3 ∼ 24 hours.

Thereafter, through a film forming process, the polyimide solution, in which solid polyimide is dissolved, is cast on a support, and then slowly heated to 40 ∼ 400°C for 1 minute ∼ 8 hours to obtain a polyimide film.

In the present invention, the polyimide film obtained in this way may be heat-treated one more time. It is preferred that the polyimide film be heat-treated at a temperature of 100 ∼ 500°C for 1 ∼ 30 minutes. The amount of volatile ingredients remaining in the heat-treated polyimide film is 5% or less, and preferably 3% or less.

The thickness of the obtained polyimide film is not particularly limited. However, it is preferred that the thickness thereof be 10 ∼ 250 *µ*m, and more preferably 25 ∼ 150 *µ*m.

The polyimide film of the present invention has a thermal expansion coefficient of 40 ppm/°C or less, and has an optical transmittance of 80% or more to light having a wavelength of 550 nm, based on film thickness of 15 ∼ 100 *µ*m. Since this polyimide film is transparent and has improved heat resistance, it can be widely used in the field of substrates used for displays, and the like.

Hereinafter, the present invention will be described in more detail with reference to the following Examples. However, the scope of the present invention is not limited thereto.

### <Preparation Example 1>

2 g of colloidal silica (average particle size: 10 nm) and 350 mL of 0.8 M nitric acid were introduced into a 500 mL round flask reflux apparatus under a nitrogen (N₂) atmosphere, and then heated and stirred at 80°C for 6 hours. Subsequently, the mixture was washed with ethanol, and then dried in a vacuum oven at 60°C for 24 hours to obtain acid-treated silica. Thereafter, 1.5 g of the acid-treated silica, 350 mL of ethanol and 0.182 g of triethoxyfluorosilane were introduced into a 500 mL round flask reflux apparatus under a nitrogen (N₂) atmosphere, heated to 60°C, and then refluxed and stirred for 12 hours. Subsequently, the mixture was washed and dried to obtain 1.515 g of a silica filler (average particle size: 20 nm) surface-treated with a fluorine-containing compound.

### <Preparation Example 2>

2 g of colloidal silica (manufactured by Nippon Shokubai Co., Ltd., average particle size: 10 nm) and 350 mL of 0.8 M nitric acid were introduced into a 500 mL round flask reflux apparatus under a nitrogen (N₂) atmosphere, and then heated and stirred at 80°C for 6 hours. Subsequently, the mixture was washed with ethanol, and then dried in a vacuum oven at 60°C for 24 hours to obtain acid-treated silica. Thereafter, 1.5 g of the acid-treated silica, 350 mL of ethanol and 0.23 g of triethoxytrifluoromethylsilane were introduced into a 500 mL round flask reflux apparatus under a nitrogen (N₂) atmosphere, heated to 60°C, and then refluxed and stirred for 12 hours. Subsequently, the mixture was washed and dried to obtain 1.72 g of a silica filler (average particle size: 25 nm) surface-treated with a fluorine-containing compound.

### <Example 1>

0.116 g of the silica filler prepared in Preparation Example 1 was dispersed in 580 g of N,N-dimethylacetamide (DMAc) to obtain a first solution while passing nitrogen through a 1L reactor provided with a stirrer, a nitrogen injector, a dripping funnel, a temperature controller and a cooler, and then the temperature of the reactor was adjusted to 25°C. Subsequently, 64.046 g (0.2 mol) of TFDB was added to the first solution and dissolved to obtain a second solution, and then 71.08 g (0.16 mol) of 6FDA was added to the second solution and stirred for 3 hours to be completely dissolved to obtain a third solution. At this time, the temperature of the third solution was maintained at 25°C. Subsequently, 9.928 g (0.04 mol) of BTA was added to the third solution and stirred for 24 hours to obtain a polyamic acid solution having a solid content of 20 wt%.

Subsequently, 0.34 g of Grubbs catalyst was added to the obtained polyamic acid solution and heated to 50°C for 30 minutes, and then 31.64 g of pyridine and 40.8 g of acetic anhydride were added thereto and stirred for 60 minutes to obtain a mixed solution. Thereafter, the mixed solution was applied onto a stainless plate, cast to a thickness of 300 *µ*m, dried at 80°C for 30 minutes or less using hot air, heated to 120°C and then further dried for 30 minutes or less to form a film. The film was detached from the stainless plate, and then fixed on a frame by a pin. The frame provided with the film was put into a hot oven, slowly heated from 120°C to 300°C for 2 hours, and then slowly cooled to separate the film from the frame, thereby obtaining a polyimide film. Finally, the obtained polyimide film was heat-treated at 300°C for 30 minutes.

### <Example 2>

0.116 g of the silica filler prepared in Preparation Example 2 was dispersed in 580 g of N,N-dimethylacetamide (DMAc) to obtain a first solution while passing nitrogen through a 1L reactor provided with a stirrer, a nitrogen injector, a dripping funnel, a temperature controller and a cooler, and then the temperature of the reactor was adjusted to 25°C. Subsequently, 64.046 g (0.2 mol) of TFDB was added to the first solution and dissolved to obtain a second solution, and then 71.08 g (0.16 mol) of 6FDA was added to the second solution and stirred for 3 hours to be completely dissolved to obtain a third solution. At this time, the temperature of the third solution was maintained at 25°C. Subsequently, 9.928 g (0.04 mol) of BTA was added to the third solution and stirred for 24 hours to obtain a polyamic acid solution having a solid content of 20 wt%.

Subsequently, 0.34 g of Grubbs catalyst was added to the obtained polyamic acid solution and heated to 50°C for 30 minutes, and then 31.64 g of pyridine and 40.8 g of acetic anhydride were added thereto and stirred for 60 minutes to obtain a mixed solution. Thereafter, the mixed solution was applied onto a stainless plate, cast to a thickness of 300 *µ*m, dried at 80°C for 30 minutes or less using hot air, heated to 120°C and then further dried for 30 minutes or less to form a film. The film was detached from the stainless plate, and then fixed on a frame by a pin. The frame provided with the film was put into a hot oven, slowly heated from 120°C to 300°C for 2 hours, and then slowly cooled to separate the film from the frame, thereby obtaining a polyimide film. Finally, the obtained polyimide film was heat-treated at 300°C for 30 minutes.

### <Example 3>

0.1165 g of the silica filler prepared in Preparation Example 1 was dispersed in 580 g of N,N-dimethylacetamide (DMAc) to obtain a first solution while passing nitrogen through a 1L reactor provided with a stirrer, a nitrogen injector, a dripping funnel, a temperature controller and a cooler, and then the temperature of the reactor was adjusted to 25°C. Subsequently, 64.046 g (0.2 mol) of TFDB was added to the first solution and dissolved to obtain a second solution, and then 66.64 g (0.15 mol) of 6FDA was added to the second solution and stirred for 3 hours to be completely dissolved to obtain a third solution. At this time, the temperature of the third solution was maintained at 25°C. Subsequently, 9.928 g (0.04 mol) of BTA and 4.965 g (0.02 mol) of 4-PEPA were added to the third solution and stirred for 24 hours to obtain a polyamic acid solution having a solid content of 20 wt%.

Subsequently, 0.34 g of Grubbs catalyst was added to the obtained polyamic acid solution and heated to 50°C for 30 minutes, and then 31.64 g of pyridine and 40.8 g of acetic anhydride were added thereto and stirred for 60 minutes to obtain a mixed solution. Thereafter, the mixed solution was applied onto a stainless plate, cast to a thickness of 300 *µ*m, dried at 80°C for 30 minutes or less using hot air, heated to 120°C and then further dried for 30 minutes or less to form a film. The film was detached from the stainless plate, and then fixed on a frame by a pin. The frame provided with the film was put into a hot oven, slowly heated from 120°C to 300°C for 2 hours, and then slowly cooled to separate the film from the frame, thereby obtaining a polyimide film. Finally, the obtained polyimide film was heat-treated at 300°C for 30 minutes.

### <Example 4>

0.1165 g of the silica filler prepared in Preparation Example 2 was dispersed in 580 g of N,N-dimethylacetamide (DMAc) to obtain a first solution while passing nitrogen through a 1L reactor provided with a stirrer, a nitrogen injector, a dripping funnel, a temperature controller and a cooler, and then the temperature of the reactor was adjusted to 25°C. Subsequently, 64.046 g (0.2 mol) of TFDB was added to the first solution and dissolved to obtain a second solution, and then 66.64 g (0.15 mol) of 6FDA was added to the second solution and stirred for 3 hours to be completely dissolved to obtain a third solution. At this time, the temperature of the third solution was maintained at 25°C. Subsequently, 9.928 g (0.04 mol) of BTA and 4.965 g (0.02 mol) of 4-PEPA were added to the third solution and stirred for 24 hours to obtain a polyamic acid solution having a solid content of 20 wt%.

Subsequently, 0.34 g of Grubbs catalyst was added to the obtained polyamic acid solution and heated to 50°C for 30 minutes, and then 31.64 g of pyridine and 40.8 g of acetic anhydride were added thereto and stirred for 60 minutes to obtain a mixed solution. Thereafter, the mixed solution was applied onto a stainless plate, cast to a thickness of 300 *µ*m, dried at 80°C for 30 minutes or less using hot air, heated to 120°C and then further dried for 30 minutes or less to form a film. The film was detached from the stainless plate, and then fixed on a frame by a pin. The frame provided with the film was put into a hot oven, slowly heated from 120°C to 300°C for 2 hours, and then slowly cooled to separate the film from the frame, thereby obtaining a polyimide film. Finally, the obtained polyimide film was heat-treated at 300°C for 30 minutes.

### <Example 5>

0.108 g of the silica filler prepared in Preparation Example 1 was dispersed in 541 g of N,N-dimethylacetamide (DMAc) to obtain a first solution while passing nitrogen through a 1L reactor provided with a stirrer, a nitrogen injector, a dripping funnel, a temperature controller and a cooler, and then the temperature of the reactor was adjusted to 25°C. Subsequently, 64.046 g (0.2 mol) of TFDB was added to the first solution and dissolved to obtain a second solution, and then 35.306 g (0.12 mol) of BPDA was added to the second solution and stirred for 3 hours to be completely dissolved to obtain a third solution. At this time, the temperature of the third solution was maintained at 25°C. Subsequently, 31.08 g (0.07 mol) of 6FDA and 4.965 g (0.02 mol) of 4-PEPA were added to the third solution and stirred for 24 hours to obtain a polyamic acid solution having a solid content of 20 wt%.

Subsequently, 0.34 g of Grubbs catalyst was added to the obtained polyamic acid solution and heated to 50°C for 30 minutes, and then 31.64 g of pyridine and 40.8 g of acetic anhydride were added thereto and stirred for 60 minutes to obtain a mixed solution. Thereafter, the mixed solution was applied onto a stainless plate, cast to a thickness of 300 *µ*m, dried at 80°C for 30 minutes or less using hot air, heated to 120°C and then further dried for 30 minutes or less to form a film. The film was detached from the stainless plate, and then fixed on a frame by a pin. The frame provided with the film was put into a hot oven, slowly heated from 120°C to 300°C for 2 hours, and then slowly cooled to separate the film from the frame, thereby obtaining a polyimide film. Finally, the obtained polyimide film was heat-treated at 300°C for 30 minutes.

### <Comparative Example 1>

A polyimide film was obtained in the same manner as in Example 1, except that a pure silica filler (manufactured by Nippon Shokubai Co., Ltd., average particle size: 10 nm), which was not treated, was added.

### <Comparative Example 2>

A polyimide film was obtained in the same manner as in Example 3, except that a pure silica filler (manufactured by Nippon Shokubai Co., Ltd., average particle size: 10 nm), which was not treated, was added.

### <Comparative Example 3>

A polyimide film was obtained in the same manner as in Example 5, except that a pure silica filler (manufactured by Nippon Shokubai Co., Ltd., average particle size: 10 nm), which was not treated, was added.

### <Comparative Example 4>

A 1L reactor provided with a stirrer, a nitrogen injector, a dripping funnel, a temperature controller and a cooler was filled with 611 g of N,N-dimethylacetamide (DMAc) while passing nitrogen through the reactor, the temperature of the reactor was adjusted to 25°C, 64.046 g (0.2 mol) of TFDB was dissolved to obtain a solution, and then the temperature of the solution was maintained at 25°C. Subsequently, 88.85 g (0.2 mol) of 6FDA was added to the solution and stirred for 24 hours to obtain a polyamic acid solution having a solid content of 20 wt%. Subsequently, 31.64 g of pyridine and 40.8 g of acetic anhydride were added to the obtained polyamic acid solution, and then stirred for 60 minutes. Thereafter, a polyimide film was obtained in the same manner as in Example 1.

### <Comparative Example 5>

A 1L reactor provided with a stirrer, a nitrogen injector, a dripping funnel, a temperature controller and a cooler was filled with 540 g of N,N-dimethylacetamide (DMAc) while passing nitrogen through the reactor, the temperature of the reactor was adjusted to 25°C, 64.046 g (0.2 mol) of TFDB was dissolved to obtain a first solution, and then the temperature of the first solution was maintained at 25°C. Subsequently, 35.306 g (0.12 mol) of BPDA was added to the first solution and stirred for 3 hours to be completely dissolved to obtain a second solution. At this time, the temperature of the second solution was maintained at 25°C. Subsequently, 35.54 g (0.08 mol) of 6FDA was added to the second solution to obtain a polyamic acid solution having a solid content of 20 wt%. Subsequently, 31.64 g of pyridine and 40.8 g of acetic anhydride were added to the obtained polyamic acid solution, and then stirred for 60 minutes. Thereafter, a polyimide film was obtained in the same manner as in Example 1.

### <Comparative Example 6>

A 1L reactor provided with a stirrer, a nitrogen injector, a dripping funnel, a temperature controller and a cooler was filled with 564 g of N,N-dimethylacetamide (DMAc) while passing nitrogen through the reactor, the temperature of the reactor was adjusted to 25°C, 64.046 g (0.2 mol) of TFDB was dissolved to obtain a first solution, and then the temperature of the first solution was maintained at 25°C. Subsequently, 53.311 g (0.12 mol) of 6FDA was added to the first solution and stirred for 3 hours to be completely dissolved to obtain a second solution. At this time, the temperature of the second solution was maintained at 25°C. Subsequently, 19.85 g (0.04 mol) of BTA was added to the second solution, and stirred for 24 hours to obtain a polyamic acid solution having a solid content of 20 wt%. Subsequently, 0.509 g of Grubbs catalyst was added to the obtained polyamic acid solution and heated to 50°C for 30 minutes, and then 31.64 g of pyridine and 40.8 g of acetic anhydride were added thereto and stirred for 60 minutes. Thereafter, a polyimide film was obtained in the same manner as in Example 1.

### <Comparative Example 7>

A 1L reactor provided with a stirrer, a nitrogen injector, a dripping funnel, a temperature controller and a cooler was filled with 543.7 g of N,N-dimethylacetamide (DMAc) while passing nitrogen through the reactor, the temperature of the reactor was adjusted to 25°C, 64.046 g (0.2 mol) of TFDB was dissolved to obtain a first solution, and then the temperature of the first solution was maintained at 25°C. Subsequently, 35.306 g (0.12 mol) of BPDA was added to the first solution and stirred for 3 hours to be completely dissolved to obtain a second solution. At this time, the temperature of the second solution was maintained at 25°C. Subsequently, 26.655 g (0.06 mol) of 6FDA was added to the second solution and stirred for 4 hours, and then 9.93 g (0.04 mol) of 4-PEPA added thereto to obtain a polyamic acid solution having a solid content of 20 wt%. Subsequently, 31.64 g of pyridine and 40.8 g of acetic anhydride were added to the obtained polyamic acid solution, and then stirred for 60 minutes. Thereafter, a polyimide film was obtained in the same manner as in Example 1.

### <Comparative Example 8>

A polyimide film was obtained in the same manner as in Example 1, except that the silica filler prepared in Preparation Example 1 was not added.

### <Comparative Example 9>

A polyimide film was obtained in the same manner as in Example 5, except that the silica filler prepared in Preparation Example 1 was not added.

### <Characteristics evaluation method>

The physical properties of each of the polyimide films of Examples 1 to 5 and Comparative Examples 1 to 9 were measured, and the results thereof are shown in Table 1 below.

### (1) Measurement of average optical transmittance (%)

The optical transmittance of each of the polyimide films at a wavelength of 550 nm was measured using an UV spectrometer (Cary 100, manufactured by Varian Corporation).

### (2) Measurement of linear thermal expansion coefficient (CTE)

The linear thermal expansion coefficient (CTE) of each of the polyimide films at 50 to 250°C was measured using a thermomechanical analyzer (TMA Q400, manufactured by TA Instrument Corporation) under the conditions of a heating rate of 10 °C/min and a sample area of 4mm × 24mm.

### (3) Measurement of haze

The haze of each of the polyimide films was measured using a hazemeter (HM-150, manufactured by Murakami Color Research Laboratory).

### (4) Measurement of thickness

The thickness of each of the polyimide films was measured using an electronic micrometer (manufactured by Anritsu Corporation).

**[Table 1]**

| Class. | Ingredients | Molar ratio | Filler | Thickness (*µ*m) | Optical transmittance (%) | CTE (ppm/°C) | Haze (%) |
|---|---|---|---|---|---|---|---|
| Ex. 1 | TFDB/6FDA+BTA | 100/80:20 | Prep. Ex.1 | 49 | 88.0 | 33.0 | 1.1 |
| Ex. 2 | TFDB/6FDA+BTA | 100/80:20 | Prep. Ex.2 | 50 | 87.8 | 33.5 | 1.0 |
| Ex. 3 | TFDB/6FDA+BTA/PEPA | 100/75:20/10 | Prep. Ex. 1 | 50 | 87.2 | 31.4 | 1.2 |
| Ex. 4 | TFDB/6FDA+BTA/PEPA | 100/75:2 0/10 | Prep. Ex.2 | 49 | 87.3 | 31.3 | 1.0 |
| Ex. 5 | TFDB/6FDA+BPDA/PEPA | 100/35:6 0/10 | Prep. Ex.1 | 50 | 87.2 | 25.7 | 1.2 |
| Comp. Ex. 1 | TFDB/6FDA+BTA | 100/80:20 | silica | 48 | 87.0 | 35.0 | 2.5 |
| Comp. Ex. 2 | TFDB/6FDA+BTA/PEPA | 100/75:20/10 | silica | 50 | 86.4 | 34.4 | 3.1 |
| Comp. Ex. 3 | TFDB/6FDA+BPDA/PEPA | 100/35:60/10 | silica | 50 | 86.3 | 28.7 | 3.3 |
| Comp. Ex. 4 | TFDB/6FDA | 100/100 | - | 50 | 90 | 55.0 | 0.8 |
| Comp. Ex. 5 | TFDB/6FDA+BPDA | 100/40:60 | - | 49 | 87.4 | 33.5 | 0.9 |
| Comp. Ex. 6 | TFDB/6FDA+BTA | 100/60:40 | - | - | - | - | - |
| Comp. Ex. 7 | TFDB/6FDA+BPDA/PEPA | 100/30:60/20 | - | 50 | 84.1 | 36.4 | 1.2 |
| Comp. Ex. 8 | TFDB/6FDA+BTA | 100/80:20 | - | 50 | 87.4 | 36.4 | 0.9 |
| Comp. Ex. 9 | TFDB/6FDA+BPDA/PEPA | 100/35:60/10 | - | 50 | 87.0 | 34.0 | 1.0 |

As shown in Table 1, comparing the polyimide films of Examples 1 and 2 with the polyimide film of Comparative Example 1, it can be ascertained that, even in the same polyimide composition and filler content, the hazes of the polyimide films of Examples 1 and 2 were 1.1 and 1.0, respectively, whereas the haze of the polyimide film of Comparative Example 1 was 2.5, which was very high. The reason for this is inferred to be that the filler included in the polyimide film of Comparative Example 1 was not uniformly dispersed or that filler particles were aggregated in the process of drying a film. These results may be applied to optical transmittance in the same way.

Meanwhile, comparing the polyimide films of Example 1 and Comparative Examples 1 and 8 with the polyimide films of Example 5 and Comparative Examples 3 and 9, respectively, it can be ascertained that, even in the same polyimide composition, the linear thermal expansion coefficients (CTEs) of the polyimide films of Examples 1 and 5 are lower than those of the polyimide films of Comparative Examples 1, 3, 8 and 9. The reason for this is inferred to be that, since the linear thermal expansion coefficient of a silica filler is lower than that of organic matter, when silica filler particles are uniformly dispersed in a polyimide resin serving as a matrix, the silica filler reduces the expansion of the polyimide resin attributable to heat.

In the case of Comparative Example 6, it can be ascertained that a polyimide film was not formed because the amount of BTA was more than 30 mol% based on the total amount of a dianhydride monomer.

## Claims

1. A polyimide resin, comprising a silica filler surface-treated with a fluorine-containing compound
wherein the polyimide resin includes a repetitive unit derived from a diamine monomer and a dianhydride monomer, and the dianhydrided monomer includes bicyclo[2.2.2]oct-7-ene-2,3,5,6-tetracarboxylic acid dianhydride (hereinafter, BTA),
wherein an amount of the bicyclo[2.2.2]oct-7-ene-2,3,5,6-tetracarboxylic acid dianhydride (hereinafter, BTA) is 4 ∼ 30 mol% based on a total amount of the dianhydride monomer,
wherein the diamine monomer is at least one fluorine-substituted diamine monomer selected from the group consisting of bisaminophenoxyphenyl heaxafluoropropane (4BDAF), bisaminophenyl hexafluoropropane (33-6F, 44-6F), bistrifluoromethyl benzidine (TFDB), and bisaminohydroxyphenyl hexafluoropropane (DBOH),
wherein the polyimide resin further comprises an anhydride monomer,
and wherein the anhydride monomer is 4-phenylethynyl phthalic anhydride (4-PEPA).

2. The polyimide resin of claim 1, wherein the silica filler is included in an amount of 0.01 to 0.1 wt% based on a total amount of the polyimide resin.

3. The polyimide resin of claim 1, wherein the fluorine-containing compound is at least one selected from the group consisting of triethoxyfluorosilane, triethoxytrifluoromethylsilane, 1,1,2,2-tetrahydroperfluorohexyltriethoxysilane, triethoxy[4-(trifluoromethyl)phenyl]silane, and triethoxy(3,3,4,4,5,5,6,6,7,7,8,8,9,9,10,10,10-heptadecafluorodecyl) silane.

4. The polyimide resin of claim 1, wherein the polyimide resin has a haze of 1.5% or less.

5. The polyimide resin of claim 1, wherein the polyimide resin has an optical transmittance of 87% or more to light having a wavelength of 550 nm, based on a film formed of the polyimide resin and having a thickness of 25 to 100 *µ*m.

6. The polyimide resin of claim 1, wherein the dianhydride monomer further includes at least one selected from the group consisting of 2,2-bis(3,4-dicarboxyphenyl)hexafluoropropane dianhydride (6FDA), 4-(2,5-dioxotetrahydrofuran-3-yl)-1,2,3,4-tetrahydronaphthalene-1,2-dicarboxylic dianhydride (TDA), pyromellitic dianhydride (1,2,4,5-benzene tetracarboxylic dianhydride, PMDA), benzophenone tetracarboxylic dianhydride (BTDA), biphenyl tetracarboxylic dianhydride (BPDA), oxydiphthalic dianhydride (ODPA), biscarboxyphenyl dimethylsilane dianhydride (SiDA), bisdicarboxyphenoxy diphenylsulfide dianhydride (BDSDA), sulfonyldiphthalic anhydride (SO2DPA), cyclobutane tetracarboxylic dianhydride (CBDA), and isopropylidenediphenoxy bisphthalic anhydride (6HBDA).

7. The polyimide resin of claim 1, wherein an amount of the 4-phenylethynyl phthalic anhydride (4-PEPA) is 20 mol% or less based on a total amount of the diamine monomer.

8. A polyimide film formed using the polyimide resin of any one of claims 1 to 7.

9. A substrate for displays, comprising the polyimide film of claim 8.

## Patentansprüche

1. Polyimidharz umfassend einen Siliciumdioxidfüllstoff, der mit einer fluorhaltigen Verbindung oberflächenbehandelt ist,
wobei das Polyimidharz eine Wiederholungseinheit enthält, die von einem Diaminmonomer und einem Dianhydridmonomer abgeleitet ist und das Dianhydridmonomer Bicyclo[2.2.2]oct-7-en-2,3,5,6-tetracarbonsäuredianhydrid (im Folgenden BTA) enthält,
wobei eine Menge des Bicyclo[2.2.2]oct-7-en-2,3,5,6-tetracarbonsäuredianhydrids (im Folgenden BTA) 4 ∼ 30 Mol-%, auf eine Gesamtmenge des Dianhydridmonomers bezogen, beträgt,
wobei das Diaminmonomer mindestens ein fluorsubstituiertes Diaminmonomer ist ausgewählt aus der Gruppe bestehend aus Bisaminophenoxyphenylhexafluorpropan (4BDAF), Bisaminophenylhexafluorpropan (33-6F, 44-6F), Bistrifluormethylbenzidin (TFDB) und Bisaminohydroxyphenylhexafluorpropan (DBOH),
wobei das Polyimidharz ferner ein Anhydridmonomer umfasst,
und wobei das Anhydridmonomer 4-Phenylethynylphthalsäureanhydrid (4-PEPA) ist.

2. Polyimidharz nach Anspruch 1, wobei der Siliciumdioxidfüllstoff in einer Menge von 0,01 bis 0,1 Gew.-%, auf ein Gesamtgewicht des Polyimidharzes bezogen, enthalten ist.

3. Polyimidharz nach Anspruch 1, wobei die fluorhaltige Verbindung mindestens eines ist ausgewählt aus der Gruppe bestehend aus Triethoxyfluorsilan, Triethoxytrifluormethylsilan, 1,1,2,2-Tetrahydroperfluorhexyltriethoxysilan, Triethoxy[4-(trifluormethyl)phenyl]silan und Triethoxy(3,3,4,4,5,5,6,6,7,7,8,8,9,9,10,10,10-heptadecafluordecyl) silan.

4. Polyimidharz nach Anspruch 1, wobei das Polyimidharz eine Trübe von 1,5 % oder weniger aufweist.

5. Polyimidharz nach Anspruch 1, wobei das Polyimidharz eine optische Transmission von 87 % oder mehr für Licht, das eine Wellenlänge von 550 nm aufweist, auf eine Folie bezogen, die aus dem Polyimid gebildete ist und eine Dicke von 25 bis 100 *µ*m aufweist, aufweist.

6. Polyimidharz nach Anspruch 1, wobei das Dianhydridmonomer ferner mindestens eines enthält ausgewählt aus der Gruppe bestehend aus 2,2-Bis(3,4-Dicarboxyphenyl)hexafluorpropandianhydrid (6FDA), 4-(2,5-Dioxotetrahydrofuran-3-yl)-1,2,3,4-tetrahydronaphthalin-1,2-dicarbonsäuredianhydrid (TDA), Pyromellitsäuredianhydrid (1,2,4,5-Benzoltetracarbonsäuredianhydrid (PMDA), Benzophenontetracarbonsäuredianhydrid (BTDA), Biphenyltetracarbonsäuredianhydrid (BPDA), Oxydiphthalsäuredianhydrid (ODPA), Biscarboxyphenyldimethylsilandianhydrid (SiDA), Bisdicarboxyphenoxydiphenylsulfiddianhydrid (BDSDA), Sulfonyldiphthalsäureanhydrid (SO2DPA), Cyclobutantetracarbonsäuredianhydrid (CBDA) und Isopropylidendiphenoxybisphthalsäureanhydrid (6HBDA).

7. Polyimidharz nach Anspruch 1, wobei eine Menge des 4-Phenylethynylphthalsäureanhydrids (4-PEPA) 20 Mol-% oder weniger, auf eine Gesamtmenge des Diaminmonomers bezogen, beträgt.

8. Polyimidfolie, die unter Anwendung des Polyimidharzes nach einem der Ansprüche 1 bis 7 gebildet wird.

9. Substrat für Anzeigen umfassend die Polyimidfolie nach Anspruch 8.

## Revendications

1. Une résine de polyimide, comprenant une charge de silice traitée en surface avec un composé contenant du fluor,
dans laquelle la résine de polyimide comprend une unité répétitive dérivée d'un monomère diamine et d'un monomère dianhydride, et le monomère dianhydride comprend le dianhydride d'acide bicyclo-[2.2.2]-oct-7-ène-2,3,5,6-tétracarboxylique (ci-après BTA),
dans laquelle la quantité de dianhydride d'acide bicyclo-[2.2.2]-oct-7-ène-2,3,5,6-tétracarboxylique (ci-après BTA) est de 4 à 30% en moles sur la base d'une quantité totale du monomère dianhydride,
dans laquelle le monomère diamine est au moins un monomère diamine substitué par du fluor choisi parmi le groupe constitué par le bisaminophénoxyphénylhexafluoropropane (4BDAF), le bisaminophénylhexafluoropropane (33-6F, 44-6F), le bistrifluorométhylhexidine (TFDB), et le bisaminohydroxyphénylhexafluoropropane (DBOH),
dans laquelle la résine de polyimide comprend en outre un monomère d'anhydride, et dans laquelle le monomère d'anhydride est l'anhydride 4-phényléthynyl phtalique (4-PEPA).

2. La résine de polyimide selon la revendication 1, dans laquelle la charge de silice est incluse en une quantité de 0,01 à 0,1% en poids sur la base d'une quantité totale de la résine de polyimide.

3. La résine de polyimide selon la revendication 1, dans laquelle le composé contenant du fluor est au moins un composé choisi parmi le groupe constitué par le triéthoxyfluorosilane, le triéthoxytrifluorométhylsilane, le 1,1,2,2-tétrahydroperfluorohexyltriéthoxysilane, le triéthoxy-[4-(trifluorométhyl)phényl]silane, et le triéthoxy-(3,3,4,4,5,5,6,6,7,7,8,8,9,9,10,10,10-heptadécafluorodécyl)silane.

4. La résine de polyimide selon la revendication 1, dans laquelle la résine de polyimide a un trouble de 1,5% ou moins.

5. La résine de polyimide selon la revendication 1, dans laquelle la résine polyimide a une transmittance optique de 87% ou plus à la lumière ayant une longueur d'onde de 550 nm, sur la base d'un film formé de la résine de polyimide et ayant une épaisseur de 25 à 100 *µ*m.

6. La résine de polyimide selon la revendication 1, dans laquelle le monomère dianhydride comprend en outre au moins un choisi parmi le groupe constitué par le dianhydride de 2,2-bis(3,4-dicarboxyphényl)hexafluoropropane (6FDA), le dianhydride 4-(2,5-dioxotétrahydrofurane-3-yl)-1,2,3,4-tétrahydronaphtalène-1,2-dicarboxylique (TDA), le dianhydride pyromellitique (le dianhydride benzène-1,2,4,5-tétracarboxylique, PMDA), le dianhydride tétracarboxylique de benzophénone (BTDA), le dianhydride tétracarboxylique de biphényl (BPDA), le dianhydride oxydiphtalique (ODPA), le dianhydride de biscarboxyméthyldiméthylsilane (SiDA), le dianhydride de bisdicarboxyméthyldiméthylsilane (BDSDA), l'anhydride sulfonyldiphtalique (SO2DPA), le dianhydride cyclobutanetétracarboxylique (CBDA), et l'anhydride isopropylidènediphénoxybisphtalique (6HBDA).

7. La résine de polyimide selon la revendication 1, dans laquelle une quantité d'anhydride 4-phényléthynylphtalique (4-PEPA) est de 20% en moles ou moins par rapport à la quantité totale du monomère diamine.

8. Un film de polyimide formé en utilisant la résine de polyimide selon l'une quelconque des revendications 1 à 7.

9. Un substrat pour écrans, comprenant le film de polyimide selon la revendication 8.
